# EUROPEAN PATENT APPLICATION

(11) **EP 4 389 718 A1**
(43) Date of publication of application: **26.06.2024**
(21) Application number: 22383260.1
(22) Date of filing: 22.12.2022
(51) Int. Cl.: C04B 20/04, C04B 26/02, C04B 111/54

(54) **ARTIFICIAL AGGLOMERATED STONE ARTICLE COMPRISING GRANULATED VITREOUS MATERIAL AND METHOD FOR THE MANUFACTURE OF SAID ARTICLE**

(71) Applicant: Cosentino Research & Development, S.L., 04850 Cantoria, Almeria (ES)
(72) Inventor: APARISI VENTURA, Juan Francisco, E-12540 Villarreal, Castellón (ES); ÁLVAREZ DE DIEGO, Javier, E-04850 Cantoria, Almería (ES); BENITO LÓPEZ, José Manuel, E-04850 Cantoria, Almería (ES); ÁLVAREZ BALADRÓN, Beatriz, E-04850 Cantoria, Almería (ES); RISUEÑO MORENO, Daniel, E-04850 Cantoria, Almería (ES)
(74) Representative: ABG Intellectual Property Law, S.L.

(57) **Abstract**

The disclosure relates to an artificial agglomerated stone article comprising a granulated vitreous material with a specific oxide composition and to a process for the manufacture thereof. The disclosure also relates to a method for obtaining the agglomerated stone article and the granulated vitreous material with a specific oxide composition from the sludges generated during the machining of artificial agglomerated stone.

## Description

### Field of the Disclosure

The disclosure comprised herein relates to artificial agglomerated stone articles for construction, decoration, and architecture, as well as to the composition and manufacture thereof. In particular, the disclosure relates to the granulated inorganic materials used as filler in these articles, the properties and obtaining of same, as well as to the waste generated during the manufacture of said articles and the valorization thereof.

### Background

Artificial agglomerated stone articles that typically simulate natural stones, and specifically those known as artificial stone surfaces, are common in the construction, decoration, architecture, and design sectors. The processes for the manufacture thereof on an industrial scale are well established today, and their applications partially overlap with those of ornamental natural stones such as marble or granite. Artificial agglomerated stone articles are typically used for manufacturing counters, kitchen countertops, sinks, shower trays, wall or floor coverings, stairs, or the like. For these uses, the aesthetic aspect and the conservation thereof over the entire useful life of the product are of vital importance. It is therefore necessary for these articles to have a high mechanical strength (to bending, abrasion, scratching), low porosity (low stainability), and high chemical resistance (for example, to acid etching).

One of the traditionally most popular agglomerated artificial stone items, highly valued for their aesthetics, hardness, and resistance to stains and wear, are the so-called quartz agglomerated surfaces. They can be manufactured simulating the colors and patterns of natural stone, or they can also have a completely artificial appearance, for example, with bright red or fuchsia colors. The basis of their composition and the technology currently used for their manufacture dates back to the late 1970s, developed by the Italian company Breton SpA, and is now known commercially in the industry as Bretonstone^{®}. The general concepts of this process are widely disclosed in the technical and patent literature, and are described, for example, in patent publication US4204820. In this production process, quartz granulate, sometimes mixed with synthetic cristobalite and/or other inorganic granulates, with varying particle sizes, is initially mixed with a hardenable binder, usually a liquid organic resin. The resulting mixture is homogenized and distributed in a temporary mold or, alternatively, on a sheet of paper, where it is compacted by vacuum vibrocompaction and subsequently hardened to result in boards with dimensions that can often reach 3.2 × 1.6 m², with thicknesses of 0.5-3 cm.

Natural quartz and synthetic cristobalite, despite being different materials, have several common characteristics leading them to be used extensively as granulated filler materials for the manufacture of durable construction/decoration surfaces, such characteristics being their high abundance and availability, hardness, translucence, luminosity, and their chemical inertness. However, they have at least one drawback. The fine fraction of respirable crystalline silica dust which is generated during the manufacture of artificial agglomerated stone articles containing quartz or cristobalite, or when this agglomerated material is processed mechanically, poses an occupational health risk to workers. To avoid this risk, workers potentially exposed to high levels of the respirable fraction of crystalline silica dust are required to use personal protective equipment (for example, particulate filtering respirators), to work with ventilation for effective air renewal, and to use measures that control the source of dust (for example, processing tools with water supply or dust extraction in the tool itself).

There are several proposals to reduce the content of quartz and/or cristobalite in quartz agglomerated surfaces, replacing it with another mineral or with an inorganic synthetic material. For example, EP3805176A1 describes the use of certain feldspar granulates with specific compositions as a substitute for quartz. WO2021019020 and WO2021018996 describe granulated synthetic silicates and their use in agglomerated artificial stones. The use of glass granulates, such as recycled or fritted glass, for example, has also been proposed in EP2409959A1 or EP3609853A1.

During the production of the artificial agglomerated stone articles, especially in the event that such articles are manufactured in the form of boards or slabs, machining processes are performed to cut, calibrate, and polish or brush the part that is being produced to the required dimensions, and to obtain the desired surface finish. These machining processes are usually performed in wet conditions, adding significant amounts of water, to cool and lubricate the machining tools and abrasives, and to prevent the formation of dust in the environment. The water in this machining is collected and added to the system again, after separating (for example, by decantation) the suspended solid material therein coming from the machining of the articles. The separated solid material is known in the trade as sludge, due to its appearance caused by the small particle size and its high water content.

These sludges are conventionally disposed of in landfills when they are not recycled into other products, which poses an environmental problem. WO2020099501 describes the use of sludges generated in the process of manufacturing artificial agglomerated stone together with other waste to produce a fertile artificial soil. Publication WO2009033943, in turn, relates to a treatment of sludges that includes drying, calcination, and cooling, before their use in the manufacture of new aggregate articles.

WO2021074780 proposes the use of the sludges resulting from the machining of artificial agglomerated stone as part of the raw material for the manufacture of vitreous materials, namely frits. The mentioned document discloses that the proposed raw material composition supposedly produces frits with a hardness of at least 5 Mohs, and a silicon dioxide content in crystalline form of less than 1%. As indicated therein, those frits are designed to be used as aggregates and filler materials in a mixture with a binder in the manufacture of articles in the form of a board or block.

Separately, US20200299188A1 relates to the production of environmentallyfriendly artificial stones from fritted sands which are obtained from melting and cooling raw materials comprising coal gangue, extraction tailings of quartz, limestone, sodium feldspar, and potassium feldspar. According to this document, the artificial stone obtained has a low cost and high mechanical strength.

However, there is a permanent need for improvements that contribute to rectifying any deficiency found in the previously described art or anywhere else.

In a first objective, the disclosure seeks to propose granulated vitreous materials suitable for use in artificial agglomerated stone articles, with improved aesthetic and chemical resistance properties.

In a second objective, the disclosure intends to meet the need for artificial agglomerated stone articles which incorporate granulated vitreous materials, with an improved performance and aesthetics.

Another objective of the present disclosure is to propose a method which allows using a high proportion of the sludges generated during the machining of the artificial agglomerated stones for the manufacture of granulated vitreous material, particularly when said stones comprise inorganic materials that are alternatives to quartz and/or cristobalite, for example sodium feldspar or soda-lime glass, which incorporate a high concentration of sodium into the stones.

### Summary of the Disclosure

The disclosure comprised herein is based on the finding by the inventors that a vitreous material with a specific oxide composition has an excellent transparency and homogeneity, while at the same time a high chemical resistance, especially to acid etching.

These properties make it advantageous for use as a filler material or filler in artificial agglomerated stone. The high transparency and high homogeneity of the vitreous material, with an absence of imperfections in the granules, when used in the manufacture of agglomerated stone, translate into an effect of depth of color, brightness, absence of porosity or defects and, in general, high surface quality when the stone is polished, qualities highly appreciated in products of this type. On the other hand, and simultaneously, the high chemical inertness of the granulated vitreous material increases the resistance to staining and the resistance to hydrolysis of the artificial agglomerated stone, essential properties for most of the uses of these materials

Therefore, in a first aspect, the disclosure relates to an artificial agglomerated stone article comprising a granulated vitreous material and a hardened binder, wherein the granulated vitreous material has a composition comprising:

| | % by weight |
|---|---|
| SiO₂ | 50 - 65% |
| Al₂O₃ | 1 - 7.5% |
| CaO | 23 - 39% |
| Na₂O | 1 - 6% |
| MgO | 0 - 1.5% |

and wherein the sum of the percentages by weight of Al₂O₃, CaO, and Na₂O in the granulated vitreous material is in the range of 32 - 43% by weight, with respect to the weight of the granulated vitreous material.

In a second aspect, the disclosure relates to the use of a granulated vitreous material such as that defined in the first aspect, for the manufacture of an artificial agglomerated stone article.

In a third aspect, the disclosure relates to a method for the manufacture of an artificial agglomerated stone article comprising the following steps:
i) preparing a mixture comprising a granulated vitreous material such as that defined in the first aspect and a hardenable binder,
ii) vacuum vibrocompacting the unhardened mixture obtained in step i), and iii) hardening the compact mixture obtained in step ii).

Additionally, the inventors have found that this granulated vitreous material can be manufactured from the sludges generated during machining, e.g. calibration, polishing, brushing, and/or cutting, of artificial agglomerated stone. It has also been found that this method of manufacture also allows use for the first time of a high proportion of sludges collected during the machining of the agglomerated stone when this stone contains a high concentration of sodium in its composition, without the advantageous properties of transparency, homogeneity, and chemical resistance of the vitreous material deteriorating.

Therefore, a fourth aspect of the disclosure relates to a method of manufacturing a granulated vitreous material comprising the following steps:
a) treating a sludge generated in the machining of agglomerated stone to obtain a treated sludge;
b) combining the treated sludge with a mineral composition to obtain a mixture;
c) heating the mixture at a temperature of 1350-1600°C to obtain a molten material;
d) cooling the molten material at a temperature equal to or less than 100°C, for example in a time equal to or less than 60 minutes, to obtain a vitreous material; and
e) grinding the vitreous material to obtain the granulated vitreous material;
wherein in step b) the amount of treated sludge and of mineral composition with which the mixture is formed is adjusted for the granulated vitreous material to have a composition comprising:

| | % by weight |
|---|---|
| SiO₂ | 50 - 65% |
| Al₂O₃ | 1 - 7.5% |
| CaO | 23 - 39% |
| Na₂O | 1 - 6% |
| MgO | 0 - 1.5% |

and wherein the sum of the percentages by weight of Al₂O₃, CaO, and Na₂O in the granulated vitreous material is in the range of 32 - 43% by weight, with respect to the weight of the granulated vitreous material.

In a fifth aspect, the disclosure relates to the use of the granulated vitreous material obtainable by the method of the fourth aspect for the manufacture of an artificial agglomerated stone article.

In a sixth aspect, the disclosure relates to an artificial agglomerated stone article comprising a granulated vitreous material obtainable by means of the method of the fourth aspect of the disclosure.

In another aspect, the disclosure relates to a method for the manufacture of an artificial agglomerated stone article comprising the following steps:
i) preparing a mixture comprising a granulated vitreous material obtainable according to the method of the fourth aspect and a hardenable binder,
ii) vacuum vibrocompacting the unhardened mixture obtained in step i), and
iii) hardening the compact mixture obtained in step ii).

Additional aspects of the disclosure relate to the use of the agglomerated stone article of the first or sixth aspect as a construction and/or decoration material, for example for the manufacture of counters, kitchen countertops, sinks, bathroom sinks, shower trays, wall or floor coverings, stairs, or the like, and to the counters, kitchen countertops, sinks, bathroom sinks, shower trays, wall or floor coverings, stairs, or the like, obtained from the agglomerated stone article of the first or sixth aspect.

### Description of the Figures

Figures 1a, 1b and 5 show images of vitreous materials with compositions according to the claims after exposure to HCl and KOH.
Figures 2-4 show images of comparative vitreous materials after exposure to HCl and KOH.

### Detailed Description of the Disclosure

Unless otherwise defined, all technical and scientific terms used herein have the same meaning as commonly understood by a person having ordinary skill in the art to which this disclosure pertains.

As used herein, the singular forms "a" and "the" also include the plural form unless the context clearly dictates otherwise.

The terms "comprise(s)" and variations thereof, encompass the terms "consist(s) essentially of" and "consist(s) of". Therefore, each time they appear herein, the term "comprise(s)" and variations thereof can be replaced with the terms "consist(s) essentially of" and "consist(s) of".

When a range is indicated herein, both the lower limit and the upper limit are included in said range.

When the amount of a component is given by a range with a lower limit of 0 or 0.0, this means that said component may not be present or may be present in an amount not exceeding the upper limit of the specified range.

As it is used here, the term "% by weight" means percentage by weight (w/w).

The skilled person readily understands that when a composition is defined by the percentage by weight of the components that form same, these values may never add up to a value exceeding 100%. The amount of all the components comprised in said composition add up to 100% of the weight thereof.

For purposes of the disclosure, the expressions "obtainable", "obtained", and equivalent expressions are used interchangeably, and in any case, the expression "obtainable" encompasses the expression "obtained".

Unless specifically indicated otherwise, or unless clearly inconsistent, all the embodiments disclosed in relation to one aspect of the disclosure are also applicable to the other aspects. Likewise, the present disclosure comprises any combination of the embodiments and preferences described herein, unless indicated otherwise or unless clearly contradicted by the context.

The terms "agglomerated stone" or "artificial agglomerated stone" are generally used and understood in the technical field of the disclosure. For purposes of clarity, but without intending to be limiting, the terms "agglomerated stone" and "artificial agglomerated stone" refer herein at least to all the materials included in the definition contained in European standard EN 14618:2009.

In the context of this disclosure, vitreous material is defined as an inorganic material, resulting from raw materials being melted and cooled to a rigid condition maintaining at least 20% by weight of amorphous phase in the composition thereof, and the rest may be made up of one or more crystalline phases. The vitreous material can be, for example, synthetic.

In the present description, the term "granule" or "granulate" refers to a material in the form of individual units (particles). Thus, the term encompasses units ranging from infinitesimal powder particles with sizes on the micrometer scale to comparatively large particles of material with sizes on the millimeter scale, for example from 1 µm to 10 mm. These terms encompass materials in the form of particles of various shapes and sizes, more or less edged or rounded, including grain particles, flakes, fines, powders, or combinations thereof. Granulated materials can be obtained in the desired particle size ranges (granulometry) by grinding and sieving/sorting, using methods known in the art.

The term "particle size", also referred to as "particle diameter", as used here, means the diameter of the individual particles. It can be measured statistically by the retention or the passage of a population of particles in calibrated sieves having openings with a known mesh size, where a particle will pass through (and will therefore be smaller than) or will be retained by (and will therefore be larger than) a certain sieve. In the cases throughout this description in which a granulated material is said to have a particle size or a granulometry in a given range, it means that less than 1% of the particles of the total population of particles in a distribution by volume of this material have a particle size outside the given range. In one embodiment, less than 0.5% of the particles of the total population of particles in a distribution of volume for this material have a particle size outside the given range. In another embodiment, less than 0.1% of the particles of the total population of particles in a distribution by volume for this material have a particle size outside the given range. For particles with a particle size < 100 micrometers, the particle size distribution of a sample can be measured, for example, by laser diffraction, for example with commercial equipment designed for that purpose (e.g., Malvern Panalytical Mastersizer 3000 equipped with a Hydro cell). For measurement, the sample can be dispersed in demineralized water with the aid of an ultrasound probe. The laser diffractometer provides particle distribution curves (% particle volume vs. particle size) and statistical values, such as D10, D50, and D90, of the sample particle population (particle size values where 10%, 50%, or 90% of the sample particle population in a distribution by volume is below this value, respectively).

The term "binder" is well known in the art and refers to a component that performs the function of holding together the granulated 'filler' material in order to form the artificial agglomerated stone article. Generally speaking, the binder in unhardened or uncured form is mixed with the granulated material and subsequently hardened or cured to give cohesion and mechanical strength to the artificial agglomerated stone article. In the present disclosure, the binder can be organic, such as organic resins (e.g. thermoset or thermoplastic), or inorganic, such as cements or geopolymers. In one embodiment, the binder of the different aspects of the disclosure can be a hardenable organic resin (before curing) or a hardened organic resin (after curing). The terms hardened organic resin and hardenable organic resin are well known in the art. According to one embodiment, organic resin or hardenable organic resin shall be understood to mean a material of a predominantly organic nature made up of a compound or a mixture of compounds, optionally together with a solvent. The compound or compounds of the mixture of compounds of the resin can be monomeric, oligomeric, or polymeric, optionally with varying molecular weights and degrees of crosslinking. At least some of the compounds of the hardenable organic resin, and optionally also the solvent, will have reactive functional groups capable of being subjected to curing or hardening by means of a crosslinking or curing reaction that hardens the organic resin, giving rise to a hardened organic resin (or hardened binder) when the curing step ends.

The composition in the different aspects and embodiments of the disclosure can be obtained by X-ray fluorescence (XRF), a well-established technique in the technological field of minerals, glass, and ceramics. The composition indicated in each case preferably corresponds to the average, calculated from at least 3 repetitions of the measurement, from the composition of samples containing a known amount of material to be analyzed (for example, 1 gram of material to be analyzed).

The concentration of boron (as B₂O₃) can also be determined by techniques known in the art. For example, by means of alkaline titrimetry, or by means of inductively coupled plasma (ICP) spectrometry. The concentration of boron can be determined according to international standard ISO 21078-1:2008. Alternatively, or in a complementary manner, high-power XRF can be used. Preferably, the method used is alkaline titrimetry.

The amount of crystalline phases and content of amorphous phase in the different aspects and embodiments of the disclosure can be determined by means of X-ray powder diffraction (XRD) analysis, for example using the Rietveld method combined with the use of an internal standard for quantification, a widely used technique in the technological field.

The term "sludge" herein refers to the solid waste resulting from the drying, decantation, concentration, and/or filtration of the suspension in water of the powder (particles with a particle size <150 micrometers) produced during the wet machining of agglomerated stones. This dry waste can still contain a certain level of moisture (generally up to 30% w/w) but does not have the sludgy consistency of the initial suspension and is generally made up of differently sized particle aggregates together with small unadhered particles.

The vitreous material according to the various aspects of the disclosure exhibits excellent properties of appearance and resistance to chemical etching that are superior to those of other vitreous materials with a different oxide composition. These properties render the granulated vitreous material of the disclosure particularly suitable for being used as a filler material in the manufacture of artificial agglomerated stone articles.

The granulated vitreous material of the different aspects of the present disclosure has a composition comprising:

| | % by weight |
|---|---|
| SiO₂ | 50 - 65% |
| Al₂O₃ | 1 - 7.5% |
| CaO | 23 - 39% |
| Na₂O | 1 - 6% |
| MgO | 0 - 1.5% |

wherein the sum of the percentages by weight of Al₂O₃, CaO, and Na₂O is in the range of 32 - 43% by weight,
and wherein the indicated percentages by weight are with respect to the weight of the granulated vitreous material.

According to particular embodiments of the disclosure, the granulated vitreous material comprises 53 - 64% by weight of SiO₂ with respect to the weight of the granulated vitreous material. In certain embodiments, it comprises 53 - 63% by weight of SiO₂.

According to particular embodiments of the disclosure, the granulated vitreous material comprises 2 - 7.5% by weight of Al₂O₃ with respect to the weight of the granulated vitreous material. In certain embodiments, it comprises 3 - 7.5% by weight of Al₂O₃. In other embodiments, it comprises 4 - 7.5%, or even 4 - 7.2%, by weight of Al₂O₃.

According to particular embodiments of the disclosure, the granulated vitreous material comprises 24 - 37% by weight of CaO with respect to the weight of the granulated vitreous material. In certain embodiments, it comprises 25 - 36% by weight of CaO.

According to particular embodiments of the disclosure, the granulated vitreous material comprises 1 - 5% by weight of Na₂O with respect to the weight of the granulated vitreous material. In certain embodiments, it comprises 1.5 - 5% by weight of Na₂O. In other embodiments, it comprises 2 - 4% by weight of Na₂O.

In particular embodiments, the granulated vitreous material comprises MgO at a concentration of 0-1% by weight, or of 0 - 0.5% by weight, with respect to the weight of the granulated vitreous material. In certain embodiments, the granulated vitreous material may comprise 0.05 - 1% by weight, or 0.05 - 0.5% by weight, of MgO with respect to the weight of the granulated vitreous material.

In particular embodiments, the sum of the percentages by weight of Al₂O₃, CaO, and Na₂O in the granulated vitreous material is in the range of 33 - 42% by weight, or 34 - 41% by weight, with respect to the weight of the granulated vitreous material.

According to certain embodiments, the granulated vitreous material of the present disclosure has a composition comprising:

| | % by weight |
|---|---|
| SiO₂ | 53 - 64% |
| Al₂O₃ | 2 - 7.5% |
| CaO | 24 - 37% |
| Na₂O | 1 - 5% |
| MgO | 0 - 1% |

wherein the sum of the percentages by weight of Al₂O₃, CaO, and Na₂O is in the range of 33 - 42% by weight, and wherein the percentages by weight are with respect to the weight of the granulated vitreous material.

According to additional embodiments, the granulated vitreous material of the present disclosure has a composition comprising:

| | % by weight |
|---|---|
| SiO₂ | 53 - 63% |
| Al₂O₃ | 3 - 7.5% |
| CaO | 25 - 36% |
| Na₂O | 1.5 - 5% |
| MgO | 0.05 - 0.5% |

wherein the sum of the percentages by weight of Al₂O₃, CaO, and Na₂O is in the range of 33 - 42% by weight, and wherein the percentages by weight are with respect to the weight of the granulated vitreous material.

The inventors have surprisingly found that for the granulated material to have the desirable properties of appearance and resistance to chemical etching, in addition to having an individual composition comprised in the ranges defined for the embodiments of the disclosure, oxides Al₂O₃, CaO, and Na₂O have to be balanced for the sum thereof to be within the described ranges. As evidenced in the examples, if this sum is outside the claimed range, even if the remaining individual concentrations are in the claimed ranges, the properties of the granulated vitreous material are inferior.

In a particular manner, the granulated vitreous material of the disclosure comprises predominantly calcium silicates. In this sense, in certain embodiments the sum of the percentages by weight of SiO₂+CaO in the composition can be in a range of 82 - 97% with respect to the weight of the material. In additional embodiments, the sum of the percentages by weight of SiO₂+CaO in the granulated vitreous material is in a range of 85 - 95% with respect to the weight of the material.

The granulated vitreous material may comprise boron. In these embodiments, the proportion of B₂O₃ in the composition of the granulated vitreous material can be in the range of 0 - 4% by weight, with respect to the weight of the granulated vitreous material. However, in preferred embodiments, the proportion of B₂O₃ is 0 - 3% by weight, with respect to the weight of the granulated vitreous material. In particular embodiments, the granulated vitreous material comprises 0.1 - 3% by weight, or even 0.5 - 2.5% by weight of B₂O₃ with respect to the weight of the granulated vitreous material.

In additional or alternative embodiments of the disclosure, the granulated vitreous material can have a composition wherein the sum of the proportion of SiO₂+Al₂O₃+CaO+Na₂O+B₂O₃ is in the range of 92-99.9% by weight, or 95 - 99.9% by weight, with respect to the weight of the granulated vitreous material. According to certain embodiments, the sum of the percentages of SiO₂+Al₂O₃+CaO+Na₂O+B₂O₃ is in the range of 96 - 99.8% by weight, or 96.5 - 99.6% by weight, with respect to the weight of the granulated vitreous material.

In additional or alternative embodiments, the granulated vitreous material may comprise K₂O at a concentration of 0 - 2% by weight, or of 0 - 1.5% by weight, with respect to the weight of the granulated vitreous material. In certain embodiments, the granulated vitreous material may comprise 0.05 - 2% by weight, or 0.05 - 1.5% by weight, of K₂O with respect to the weight of the granulated vitreous material.

In any of the embodiments of the disclosure, the granulated vitreous material may comprise Fe₂O₃ at a concentration of 0 - 0.5% by weight, or even 0 - 0.2% by weight, with respect to the weight of the granulated vitreous material. In certain embodiments, the granulated vitreous material may comprise 0.05 - 0.5% by weight, or 0.05 - 0.2% by weight, of Fe₂O₃ with respect to the weight of the granulated vitreous material.

In additional or alternative embodiments, the granulated vitreous material may comprise TiOz at a concentration of 0 - 1.2% by weight, or even 0 - 1% by weight, with respect to the weight of the granulated vitreous material. In certain embodiments, the granulated vitreous material may comprise 0.05 - 1.2% by weight, or 0.05 - 1% by weight, of TiOz with respect to the weight of the granulated vitreous material.

According to certain embodiments, the granulated vitreous material of the present disclosure may further comprise:

| | % by weight |
|---|---|
| B₂O₃ | 0 -3% |
| K₂O | 0 - 2% |
| Fe₂O₃ | 0 - 0.5% |
| TiO₂ | 0 - 1.2% |

with respect to the weight of the granulated vitreous material.

In certain embodiments, the granulated vitreous material of the present disclosure further comprises:

| | % by weight |
|---|---|
| B₂O₃ | 0.1 - 3% |
| K₂O | 0.05 - 2% |
| Fe₂O₃ | 0.05 - 0.5% |
| TiO₂ | 0.05 - 1.2% |

with respect to the weight of the granulated vitreous material.

The granulated vitreous material may comprise other inorganic oxides such as ZrO₂ and/or BaO. In additional or alternative embodiments, the granulated vitreous material may comprise 0 - 0.3% by weight, or 0 - 0.1% by weight, of ZrO₂ with respect to the weight of the granulated vitreous material. In additional or alternative embodiments, the granulated vitreous material may comprise 0 - 0.3% by weight, or 0 - 0.1% by weight, of BaO with respect to the weight of the granulated vitreous material.

The granulated vitreous material of the disclosure may comprise silica in crystalline form (e.g. as quartz, cristobalite, and/or tridymite). However, preferably, the amount of crystalline silica in the granulated vitreous material is ≤ 10% by weight, or even ≤ 5% by weight, with respect to the weight of the granulated vitreous material. In an additional embodiment, the amount of crystalline silica in the granulated vitreous material is ≤2% by weight, or even ≤1% by weight, with respect to the weight of the granulated vitreous material. Therefore, in certain embodiments, the amount of crystalline silica in the granulated vitreous material is 0-10% by weight, or 0-5% by weight, or even 0-2% by weight or 0-1% by weight, with respect to the weight of the granulated vitreous material.

According to some embodiments of the disclosure, the total content of amorphous or non-X-ray diffracting phase in the granulated vitreous material can be 90-100% by weight, or even 95-100% by weight, with respect to the weight of the granulated vitreous material, with the rest being made up of the sum of the crystalline phases comprised in said material (in the event that said crystalline phases are present). In possible embodiments, the sum of the crystalline phases (for example, diopside, anorthite, quartz, wollastonite, albite, cristobalite, or others) in the granulated vitreous material is 0-10% by weight, or 0-5% by weight, with respect to the weight of the granulated vitreous material. In additional embodiments, the sum of the crystalline phases in the granulated vitreous material is 0-2% by weight, or even 0-1% by weight, with respect to the weight of the granulated vitreous material.

The granulated vitreous material can have different particle sizes, for example, comprised between 0.01 mm and 5 mm. According to one embodiment, the vitreous material has a particle size in the range of 0.02-2 mm, or even 0.03-1.2 mm. In certain embodiments, the granulated vitreous material can have a particle size in the range of 0.01-1 mm, or even 0.02-0.7 mm.

The vitreous material of the disclosure can be obtained by means of a first method that comprises using sludges coming from the machining of agglomerated stone. The concept of the present disclosure thereby allows this waste material to be recycled in a circular manner in the production of articles which generates such waste. Furthermore, this method has allowed use for the first time of a high proportion of the sludges generated during the machining of the agglomerated stone when this stone contains a high concentration of sodium in its composition, without the advantageous properties of transparency, homogeneity, and chemical resistance of the vitreous material deteriorating.

Therefore, the granulated vitreous material of the disclosure can be obtained by a first method which comprises:
a) treating a sludge generated in the machining of agglomerated stone to obtain a treated sludge;
b) combining the treated sludge with a mineral composition to obtain a mixture;
c) heating the mixture at a temperature of 1350-1600°C to obtain a molten material;
d) cooling the molten material at a temperature equal to or less than 100°C, for example in a time equal to or less than 60 minutes, or 45 minutes, to obtain a vitreous material; and
e) grinding the vitreous material to obtain the granulated vitreous material;
wherein in step b) the amount of treated sludge and of mineral composition with which the mixture is formed is adjusted for the granulated vitreous material to have a composition comprising:

| | % by weight |
|---|---|
| SiO₂ | 50 - 65% |
| Al₂O₃ | 1 - 7.5% |
| CaO | 23 - 39% |
| Na₂O | 1 - 6% |
| MgO | 0 - 1.5% |

and wherein the sum of the percentages by weight of Al₂O₃, CaO, and Na₂O in the granulated vitreous material is in the range of 32 - 43% by weight, wherein the indicated percentages by weight are with respect to the weight of the granulated vitreous material.

This method of preparing the granulated vitreous material uses materials (sludges) coming from wet machining or processing (i.e., with the addition of water) of agglomerated stone, such as cutting, calibration, grinding, polishing, or brushing of said agglomerated stone, especially in the case of boards or slabs.

It has been identified that this method for the preparation of a vitreous material from the sludge generated in the machining of agglomerated stone allows the use of a large amount (for example >60% by weight) of sludge generated in the machining of agglomerated stone together with the mineral composition, even when the agglomerated stone contains a high concentration of sodium in the composition thereof, without the excellent properties of transparency, homogeneity, and chemical resistance of the final vitreous material deteriorating. The high sodium content of the starting agglomerated stone may be due, for example, to the presence of sodium feldspar or soda-lime glass granules in the composition of the agglomerated stone, instead of the quartz or cristobalite traditionally used as a filler material or filler.

The composition of the agglomerated stone from which the sludge is generated determines the composition of the sludge generated in the machining of agglomerated stone. Therefore, in embodiments of the disclosure, the sludge of step a) is generated in the machining of agglomerated stone comprising feldspar and/or glass granules. The feldspar granules can be of sodium feldspar or albite, for example feldspar comprising Na₂O in the range of 5-11.9% by weight with respect to the weight of the feldspar granules. The feldspar granules can be comprised in the agglomerated stone from which the sludge is generated in a proportion of 5-80% by weight, or of 10-70% by weight, with respect to the weight of the agglomerated stone.

In alternative or additional embodiments, the agglomerated stone from which the sludge is generated may comprise glass granules with high concentrations of Na₂O in the composition thereof. In certain embodiments, the agglomerated stone from which the sludge is generated comprises glass granules comprising 5-30% by weight, or 7-20% by weight, of Na₂O with respect to the weight of the glass granules. The glass granules can be comprised in the agglomerated stone from which the sludge is generated in a proportion of 5-80% by weight, or of 10-70% by weight, with respect to the weight of the agglomerated stone. Glass is understood to mean an amorphous inorganic material that results from the more or less rapid cooling of a melt. In this context, materials known as frits, obtained by the rapid cooling (fritting or quenching) of the melt, are included among what is understood as glass. In certain embodiments, the glass comprised in the agglomerated stone is soda-lime glass, such as the type frequently used in the manufacture of plate glass or glass for containers. The glass comprised in the agglomerated stone can be recycled glass.

According to embodiments of the disclosure, the agglomerated stone from which the sludge is generated comprises 2-12% by weight, or 2.5-10% by weight, of Na₂O with respect to the weight of the agglomerated stone. In particular embodiments, the agglomerated stone from which the sludge is generated comprises 3-10% by weight, or 3.5-9% by weight, of Na₂O with respect to the weight of the agglomerated stone.

In some embodiments, the agglomerated stone from which the sludge is generated may comprise quartz and/or cristobalite, for example in a proportion of 1-60% by weight, or of 5-50% by weight, with respect to the weight of the agglomerated stone.

In additional or alternative embodiments, the agglomerated stone from which the sludge is generated comprises a hardened binder, such as an organic resin, in a proportion of 5-20% by weight, or of 5-15% by weight, with respect to the weight of the agglomerated stone. In a particular embodiment, the hardened binder in the agglomerated stone from which the sludge is obtained is a hardened organic resin. Typical organic resins include polymer resins such as polyester resins, acrylic resins, epoxy resins, and vinyl resins. In a particular embodiment, the organic resin is a polyester resin; more particularly an unsaturated polyester resin.

In one embodiment, the agglomerated stone from which the sludge is generated comprises:
- 80-95% by weight of stone or stone-like granules, such as quartz, cristobalite, ceramic, glass, marble, feldspar, or mixtures thereof, with respect to the weight of the agglomerated stone;
- 5-20% by weight of a hardened binder, such as a hardened organic resin, with respect to the weight of the agglomerated stone.

In particular embodiments:
- the stone or stone-like granules comprise Na₂O in the composition thereof, such that the agglomerated stone comprises 2-12% by weight, or 2.5-10% by weight, of Na₂O with respect to the weight of the agglomerated stone; and/or
- the stone or stone-like granules comprise Na₂O in the composition thereof, such that the agglomerated stone comprises 3-10% by weight, or 3.5-9% by weight, of Na₂O with respect to the weight of the agglomerated stone; and/or
- the stone or stone-like granules comprise 5-80% by weight, or even 10-70% by weight, of feldspar and/or glass granules comprising 5-20% by weight, or even 5-11.9% by weight, of Na₂O with respect to the weight of the feldspar and/or glass granules; and/or
- the stone or stone-like granules comprise 1-60% by weight, or even 5-50% by weight, of quartz and/or cristobalite granules.

Optionally, the agglomerated stone from which the sludge is generated may comprise 0-5% by weight of additives, such as pigments, with respect to the weight of the agglomerated stone.

In certain embodiments, the agglomerated stone from which the sludge is generated comprises stone or stone-like granules (such as quartz, cristobalite, ceramic, glass, marble, or feldspar granules, or mixtures thereof) which have an overall composition comprising:
- 65-90% by weight, or even 65-85% by weight, of SiO₂; and/or
- 4-15% by weight, or even 4-12% by weight, of Al₂O₃; and/or
- 0.5-10% by weight, or even 0.5-9% by weight, of CaO; and/or
- 3-12% by weight, or even 3.5-11% by weight, of Na₂O;
with respect to the weight of the stone or stone-like granules.

In one embodiment, the sum of the percentages of SiOz and Al₂O₃ in the stone or stone-like granules is 65-97% by weight, or even 70-95% by weight, with respect to the weight of the stone or stone-like granules.

In particular embodiments, the agglomerated stone from which the sludge is generated comprises stone or stone-like granules comprising:

| | % by weight |
|---|---|
| SiO₂ | 65 - 85% |
| Al₂O₃ | 4 - 12% |
| CaO | 0.5 - 10% |
| Na₂O | 3 - 12% |

with respect to the weight of the stone or stone-like granules.

In particular embodiments, the agglomerated stone from which the sludge is generated comprises stone or stone-like granules comprising:
- 65-90% by weight, or even 65-85% by weight, of SiO₂; and/or
- 4.5-15% by weight, or even 7.5-13% by weight, of Al₂O₃; and/or
- 0.5-10% by weight, or even 1-9% by weight, of CaO; and/or
- 4-11% by weight, or even 4.5-8% by weight, of Na₂O;
with respect to the weight of the stone or stone-like granules.

In an additional embodiment, the agglomerated stone from which the sludge is generated comprises stone or stone-like granules with a composition comprising:

| | % by weight |
|---|---|
| SiO₂ | 65 - 85% |
| Al₂O₃ | 4.5 - 15% |
| CaO | 0.5 - 10% |
| Na₂O | 4 - 11% |

with respect to the weight of the stone or stone-like granules.

Optionally, the composition of the stone or stone-like granules in the agglomerated stone from which the sludge is generated may comprise other additional components such as B₂O₃, MgO, K₂O, Fe₂O₃, TiO₂, ZrO₂, BaO, CoO, or mixtures thereof; for example in a total amount less than 10% by weight, or even less than 5% by weight, with respect to the weight of the stone or stone-like granules. For example,
- 0-1% by weight, or even 0-0.5% by weight, of B₂O₃; and/or
- 0-5% by weight, or even 0-2% by weight, of MgO; and/or
- 0-2% by weight, or even 0-1% by weight, of K₂O; and/or
- 0-2% by weight, or even 0-1% by weight, of Fe₂O₃; and/or
- 0-4% by weight, or even 0-3% by weight, of TiO₂; and/or
- 0-2% by weight, or even 0-1.5% by weight, of ZrO₂; and/or
- 0-1% by weight, or even 0-0.5% by weight, of BaO; and/or
- 0-2% by weight, or even 0-1% by weight, of CoO;
with respect to the weight of the stone or stone-like granules.

The sludges generated in the machining of agglomerated stone are obtained as an aqueous suspension during the production of this material, especially in the case of boards or slabs, during the machining processes for cutting, calibrating, and polishing or brushing the part that is being produced. The generated aqueous suspension is subjected to filtration and/or decantation, and the solid material is separated. These sludges can be stockpiled until having the desired amount. The sludges generated in the machining of agglomerated stone have a predominantly inorganic composition, with the possibility of there being an organic matter content coming from, for example, the binder used in the agglomerated stone or the protective paper sometimes used in the manufacture of these articles, as well as a certain water content.

The sludges resulting from the machining of agglomerated stone may comprise predominantly stone or stone-like particles, such as quartz, cristobalite, ceramic, glass, marble, or feldspar, and in a smaller proportion binders such as hardened organic resins, water, abrasive particles of the machining tools, coloring agents or pigments and in some cases also pieces of paper or paper fibers.

The sludge generated in the machining of agglomerated stone is obtained after separating, by means of decantation and/or filtration, the suspension of particles from the water in the aqueous suspension obtained during the machining of the agglomerated stone. After this separation, in one embodiment the water content of the sludge generated in the machining of agglomerated stone is 10-40% by weight, or 20-35% by weight, with respect to the weight of the sludge generated in the machining of agglomerated stone.

In one embodiment, the sludge generated in the machining of agglomerated stone comprises 55-80% by weight, or 60-75% by weight, of stone or stone-like particles (such as quartz, cristobalite, ceramic, glass, marble, or feldspar) with respect to the total weight of the sludge generated in the machining of agglomerated stone.

According to one embodiment, the sludge generated in the machining of agglomerated stone comprises 3-15% by weight, or 5-13% by weight, of a hardened binder (such as a hardened organic resin, for example polyester resin, including unsaturated polyester resin, acrylic resin, epoxy resin, or vinyl resin) with respect to the total weight of the sludge generated in the machining of agglomerated stone.

In a particular embodiment, the sludge generated in the machining of agglomerated stone comprises:
- 10-40% by weight of water,
- 55-80% by weight of stone or stone-like particles, and
- 3-15% by weight of hardened binder,
with respect to the weight of the sludge generated in the machining of agglomerated stone.

Optionally, the sludge generated in the machining of agglomerated stone may comprise other additional components such as abrasive particles coming from the machining tools, pigments, and/or pieces of paper or paper fibers (from the protective layers used during the compaction or curing of the agglomerated stone), for example in an amount less than or equal to 3% by weight, or even in an amount less than or equal to 2% by weight, with respect to the total weight of the sludge generated in the machining of agglomerated stone.

In a particular embodiment, the sludge generated in the machining of agglomerated stone comprises:
- 10-40% by weight of water,
- 55-80% by weight of stone or stone-like particles,
- 3-15% by weight of hardened binder,
- optionally, 0-5% by weight, or 0.01-5% by weight, of additives, such as pigments,
- optionally, 0-8% by weight, or 0-5% by weight, of paper fibers,
- optionally, 0-3% by weight, or 0-2% by weight, of abrasive particles of the machining tools, such as diamond,
with respect to the weight of the sludge generated in the machining of agglomerated stone.

According to particularly suitable embodiments of the disclosure, the sludge used generated in the machining of agglomerated stone comprises stone or stone-like particles with a mean composition as defined above for the stone or stone-like granules of the agglomerated stone from which the sludge is generated, with respect to the weight of the stone or stone-like particles.

In step a), the sludge generated in the machining of agglomerated stone is treated to produce a treated sludge. The objective of this treatment is to remove or reduce the non-inorganic components present in the sludge, such as the hardened binder coming from the agglomerated stone or other components such as possible paper fibers and/or water.

According to a particular embodiment, step a) comprises treating a sludge generated in the machining of artificial stone until obtaining a treated sludge:
- with a water content less than or equal to 2% by weight with respect to the weight of the treated sludge, and/or
- with a loss on ignition (or LOI) less than or equal to 3% by weight with respect to the weight of the treated sludge.

The water content can be determined with a thermobalance set to 120°C for 15 minutes, for example with a one-gram sample.

The term loss on ignition (LOI) refers to the weight loss of the material when it is calcined. LOI includes both the organic matter that combusts and inorganic matter that breaks down at high temperatures, generating volatile substances. LOI can be determined by several methods known to the person skilled in the art, such as X-ray fluorescence or thermogravimetry.

In one embodiment, step a) comprises heat treating the sludge generated in the machining of agglomerated stone. This treatment can be performed at a temperature of 30-1050°C, for example for at least 0.5 hours or even for at least 1 hour. As the person skilled in the art will understand, the higher the temperature, the shorter the necessary treatment time will be. This heat treatment can be performed by means of methods known to the person skilled in the art; for example, by means of air drying (e.g., in open and/or ventilated space) to remove or reduce the water and other volatile substances, or by heating in a furnace.

According to a particular embodiment, step a) of treating a sludge generated in the machining of agglomerated stone comprises treating said sludge at a temperature of 30-120°C for at least 12 hours, for example air drying or drying in a furnace. It is thereby possible to remove or reduce the water and other volatile substance content of the sludge.

In an alternative or complementary embodiment, step a) of treating a sludge generated in the machining of agglomerated stone comprises treating said sludge at a temperature of 400-1050°C, or even at a temperature of 500-1000°C. Calcination of the sludge thereby occurs, obtaining a treated sludge with a reduced loss on ignition, such as less than or equal to 3%, or 0.1 - 3%, by weight with respect to the weight of the treated sludge. The calcination time will depend on the temperature and on the design of the calciner. In a particular embodiment, the sludge is treated with a temperature profile with a maximum between 400-1050°C, or even between 500-1000°C, with a residence time at that maximum temperature of 0.5-7 hours, or even of 1-6 hours, for example in a furnace.

In one embodiment of the disclosure, especially when the sludge generated in the machining of agglomerated stone comprises organic matter (such as hardened binder and/or paper fibers) in an amount greater than 3% by weight with respect to the weight of the sludge generated in the machining of agglomerated stone, step a) comprises calcining said sludge by means of heating with a temperature profile with a maximum between 400-1050°C, or even between 500-1000°C, for example, with a residence time at that maximum temperature of 0.5-7 hours, or even of 1-6 hours.

Calcination produces a calcined treated sludge with a reduced organic matter content, and/or with a loss on ignition of 0 - 3% by weight, or 0 - 2% by weight, or 0.1-3% by weight, or 0.1-2% by weight, with respect to the weight of the treated sludge.

Calcination can suitably be performed, for example, in a furnace, such as a rotary furnace, with the treatment of the gases produced. Calcination may also comprise pyrolysis of the sludges in different atmospheres, or separate thermal processes in different steps characterized by different conditions of ambient atmosphere and temperature.

In a particular embodiment, step a) comprises:
- treating the sludge generated in the machining of agglomerated stone at a temperature of 30-120°C, for example for at least 12 hours, for example until obtaining a sludge with a water content less than or equal to 2% with respect to the weight of the treated sludge, and
- treating the resulting sludge at a temperature of 400-1050°C, or even at a temperature of 500-1000°C (calcination), for example for 0.5-7 hours or even for 1-5 hours, for example until obtaining a sludge with a loss on ignition less than or equal to 3% with respect to the weight of the treated sludge.

In the event that step a) comprises calcination of the sludge, this step can be performed prior to and separately from steps b) and c). That is, in certain embodiments, the treated sludge that is combined with a mineral composition to give a mixture in step b) is a calcined treated sludge. The amount of organic matter present in the sludge is thereby reduced, and during step c) of heating (melting), the generation of gases with excessive organic compounds which cause contamination or which need expensive gas treatment systems is prevented.

The treated sludge obtained after step a) has a composition comprising:
- 65-90% by weight, or even 65-85% by weight, of SiOz with respect to the weight of the treated sludge; and/or
- 4-15% by weight, or even 4-12% by weight, of Al₂O₃ with respect to the weight of the treated sludge; and/or
- 0.5-10% by weight, or even 0.5-9% by weight, of CaO with respect to the weight of the treated sludge; and/or
- 3-12% by weight, or even 3.5-11% by weight, of Na₂O with respect to the weight of the treated sludge.

In one embodiment, the sum of the percentages of SiOz and Al₂O₃ in the treated sludge is 65-97% by weight, or even 70-95% by weight, with respect to the weight of the treated sludge.

In particular embodiments, the treated sludge has a composition comprising:

| | % by weight |
|---|---|
| SiO₂ | 65 - 85% |
| Al₂O₃ | 4 - 12% |
| CaO | 0.5 - 10% |
| Na₂O | 3 - 12% |

with respect to the weight of the treated sludge.

In particular embodiments, the treated sludge has a composition comprising:
- 65-90% by weight, or even 65-85% by weight, of SiO₂; and/or
- 4.5-15% by weight, or even 7.5-13% by weight, of Al₂O₃; and/or
- 0.5-10% by weight, or even 1-9% by weight, of CaO; and/or
- 4-11% by weight, or even 4.5-8% by weight, of Na₂O;
with respect to the weight of the treated sludge.

In an additional embodiment, the treated sludge has a composition comprising:

| | % by weight |
|---|---|
| SiO₂ | 65 - 85% |
| Al₂O₃ | 4.5 - 15% |
| CaO | 0.5 - 10% |
| Na₂O | 4 - 11% |

with respect to the weight of the treated sludge.

Other possible components of the treated sludge are other inorganic oxides and other matter sustaining a loss on ignition (LOI). Preferably, the LOI is equal to or less than 3% by weight, or equal to or less than 2% by weight, or even equal to or less than 1% by weight, with respect to the weight of the treated sludge. In an additional embodiment, the amount of LOI is in the range of 0.01-3% by weight, or 0.01-2% by weight, or even 0.01-1% by weight, with respect to the weight of the treated sludge.

Optionally, the composition of the treated sludge may comprise other additional components, like inorganic oxides such as B₂O₃, MgO, K₂O, Fe₂O₃, TiO₂, ZrO₂, BaO, CoO, or mixtures thereof; for example in a total amount less than 10% by weight, or even less than 5% by weight, with respect to the weight of the treated sludge. For example,
- 0-1% by weight, or even 0-0.5% by weight, of B₂O₃; and/or
- 0-5% by weight, or even 0-2% by weight, of MgO; and/or
- 0-2% by weight, or even 0-1% by weight, of K₂O; and/or
- 0-2% by weight, or even 0-1% by weight, of Fe₂O₃; and/or
- 0-4% by weight, or even 0-3% by weight, of TiO₂; and/or
- 0-2% by weight, or even 0-1.5% by weight, of ZrO₂; and/or
- 0-1% by weight, or even 0-0.5% by weight, of BaO; and/or
- 0-2% by weight, or even 0-1% by weight, of CoO;
with respect to the weight of the treated sludge.

According to some embodiments, the treated sludge may comprise albite (NaAlSi₃O₃) as the crystalline phase, which can be determined by means of XRD for example. In one embodiment, the treated sludge comprises 15-70% by weight, or 20-60% by weight, of albite with respect to the weight of the treated sludge. In alternative or complementary embodiments, the treated sludge comprises one or more crystalline silica phases, for example, in the form of quartz, tridymite, and/or cristobalite. In one embodiment, the treated sludge comprises 5-60% by weight, or 15-55% by weight, of crystalline silica phases with respect to the weight of the treated sludge. In alternative or complementary embodiments, the treated sludge comprises 1-30%, or 1-15% by weight, of amorphous or non-X-ray diffracting material with respect to the weight of the treated sludge.

In step b), the treated sludge is combined with a mineral composition to obtain a mixture with the composition necessary to obtain the vitreous material of the disclosure. In one embodiment, the treated sludge used in step b) is calcined sludge.

The mixture obtained in step b) has a chemical composition (oxide mixture) which, during melting, results in the composition of the vitreous material of the disclosure. The person skilled in the art would know, considering the losses on ignition and the decomposition of the minerals into volatile compounds, how to adjust the amount of treated sludge and of mineral composition to obtain a mixture with the chemical composition necessary to result in the vitreous material of the disclosure. For example, the chemical composition of the treated sludge can be determined by known methods (e.g., by means of XRF) and the amount and composition of the mineral composition necessary to obtain a mixture with the desired final composition can be calculated. In one embodiment, the composition of the mixture obtained by means of XRF in step b) is as it has been defined herein for the vitreous material of the disclosure.

The combination of the treated sludge and the mineral composition can be performed by known methods, for example in an industrial mixer, to obtain a homogeneous mixture. In one embodiment, the treated sludge and the mineral composition have a particle size less than 100 micrometers, for example with a D90 less than 60 micrometers, or even less than 45 micrometers, to favor the homogenization and melting of the mixture obtained in step b).

In some embodiments, the treated sludge can be in the mixture obtained in step b) in a proportion of 5-70% by weight, or of 10-65% by weight, with respect to the weight of this mixture. In some embodiments, the mixture obtained in step b) comprises 30-95% by weight, or 35-90% by weight, of the mineral composition with respect to the weight of this mixture. In addition to the treated sludge and the mineral composition, the mixture obtained in step b) may comprise other inorganic components, such as synthetic silicates, glass (for example, frits), or other ceramic materials, in a proportion of 0-15% by weight with respect to the weight of said mixture.

It should be noted that this method of preparing the vitreous material allows the incorporation in the mixture of step b) of high amounts of treated sludge even when this sludge has a high Na₂O content (such as sludge comprising 3-12% by weight, or 3.5-11% by weight, of Na₂O with respect to the weight of the treated sludge), without the properties of transparency, homogeneity, or resistance to chemical etching of the resulting material significantly deteriorating. In a particular embodiment, the mixture obtained in step b) comprises 20-70% by weight, or 25-65% by weight, of treated sludge with respect to the weight of the mixture, wherein the treated sludge comprises 3-12% by weight, or 3.5-11% by weight, of Na₂O with respect to the weight of the treated sludge.

The mineral composition used in step b) may comprise one or more minerals. The minerals comprised in this mineral composition can be selected, for example, from the minerals commonly used for the manufacture of glass or frits. There are a number of combinations that can result in the composition of the granulated vitreous material of the disclosure. The person skilled in the art knows how to identify the appropriate minerals and the proportion thereof, which will depend on the composition of each mineral in question and on the composition/proportion of the treated sludge, in order to arrive at the composition of the granulated vitreous material of the disclosure. The minerals in the mineral composition can be natural or synthetic, such as minerals of the type oxides, silicates, carbonates, aluminosilicates, borates. In this sense, silica sand, quartz, sodium feldspar, potassium feldspar, and kaolin are possible raw materials which supply SiOz to the final composition of the granulated vitreous material. Alumina (calcined or hydrated), feldspars, and kaolin are examples of possible minerals supplying Al₂O₃. Calcium carbonate, lime, dolomite, or magnesite can be used as sources of CaO. The B₂O₃ supply, if needed, can be obtained using boric acid, colemanite, or borax. Likewise, the skilled person knows the minerals suitable for supplying the remaining chemical elements which are or can be comprised in the composition of the granulated vitreous material. In embodiments of the disclosure, the mineral composition used in step b) may comprise any mineral selected from the group made up of quartz, feldspar (for example, sodium feldspar, potassium feldspar), dolomite, calcium carbonate, sodium carbonate, lime, alumina, colemanite, or a mixture of two or more of same.

The mixture resulting after step b) is heated in step c) at a temperature reaching 1350-1600°C, or 1400-1550°C, at its maximum point to produce a molten material. In one embodiment, the mixture is heated at the indicated maximum temperature for 0.3-1.5 h, or for 0.4-1.2 h. In a particular embodiment, step c) is performed in an industrial melting furnace or a frit furnace.

The composition of the resulting molten material, which corresponds with the composition of the vitreous material of the disclosure, results in a melt with low viscosity, which favors the homogenization and deaeration thereof. The composition of the molten material shows a low tendency for phase separation or for the occurrence of devitrification.

The molten material obtained in step c) is cooled until reaching a temperature equal to or less than 100°C, or even equal to or less than 50°C, generating a solid and cooled vitreous material. In a particular embodiment, it is cooled to a temperature of 10-100°C, or even of 10-50°C. In an additional embodiment, it is cooled to a temperature of 10-30°C. This step of cooling can be performed rapidly (quenching) to prevent recrystallization of the molten material, such as a time equal to or less than 60 minutes, or even equal to or less than 40 minutes, for example in a time of 0.5-60 minutes, or even of 0.5-40 minutes. In a particular embodiment, step d) comprises cooling the molten material obtained in step c) to a temperature equal to or less than 50°C, in a time equal to or less than 60 minutes, or even equal to or less than 40 minutes. The cooling time is considered to be the period of time it takes for the melt being removed from the furnace to reach the selected cooling temperature over its entire extension.

Suitably, the molten material is subjected to the cooling temperature directly after being removed from the furnace. This cooling can be carried out by means of methods known in the art; for example, by pouring the molten material onto a surface at the indicated cooling temperature, pouring the molten material onto a receptacle with circulating water at the indicated cooling temperature, passing the molten material between rollers cooled with water at the indicated cooling temperature, or by means of contact with air at the indicated cooling temperature.

In embodiments of the claimed method, this method does not comprise any separate step of annealing, recrystallization, or tempering, with these steps being understood to be additional heat treatments of the material at temperatures greater than the cooling temperature for a period exceeding 5 minutes, or 1 minute, after the step of melting, and before or after the step of cooling and/or grinding.

The chemical composition of the molten material (which corresponds with the composition of the vitreous material of the disclosure) together with its rapid cooling (for example, by quenching) result in an essentially amorphous cooled vitreous material. The vitreous material obtained in step d), and therefore the granulated vitreous material obtained in step e), may comprise silica in crystalline form (e.g. as quartz, cristobalite, and/or tridymite). However, preferably, the amount of crystalline silica in the vitreous material of step d) or in the granulated vitreous material of step e) is ≤ 10% by weight, or even ≤ 5% by weight, with respect to the weight of the vitreous material or of the granulated vitreous material, respectively. In an additional embodiment, the amount of crystalline silica in the vitreous material of step d) or in the granulated vitreous material of step e) is ≤2% by weight, or even ≤1% by weight, with respect to the weight of the vitreous material or of the granulated vitreous material, respectively. Therefore, in certain embodiments, the amount of crystalline silica in the vitreous material of step d) or in the granulated vitreous material of step e) is 0-10% by weight, or 0-5% by weight, or even 0-2% by weight or 0-1% by weight, with respect to the weight of the vitreous material or of the granulated vitreous material, respectively.

According to some embodiments of the disclosure, the total content of amorphous phase in the vitreous material of step d) or in the granulated vitreous material of step e) can be in the range of 90-100% by weight, or even 95-100% by weight, with respect to the weight of the vitreous material or of the granulated vitreous material, respectively, with the rest being made up of the sum of the crystalline phases comprised in said material. In possible embodiments, the sum of the crystalline phases in the vitreous material of step d) or in the granulated vitreous material of step e) is 0-10% by weight, or 0-5% by weight, with respect to the weight of the vitreous material or of the granulated vitreous material, respectively. In additional embodiments, the sum of the crystalline phases in the vitreous material of step d) or in the granulated vitreous material of step e) is 0-2% by weight, or even 0-1% by weight, with respect to the weight of the vitreous material or of the granulated vitreous material, respectively.

In step e), the cooled vitreous material obtained in step d) is ground (or milled) to produce a granulated vitreous material. Grinding reduces the material to the desired particle size and can be accompanied by a step of sorting the granulate among defined particle size ranges. The grinding or milling, and the possible sorting, can be performed for example in an industrial mill, and optionally a sieve and/or sorter, such as those known in the art.

In embodiments of the disclosure, in step e) the vitreous material is ground or milled to a particle size of 0.01-5 mm. According to one embodiment, the vitreous material is ground or milled to a particle size of 0.02-2 mm, or even 0.03-1.2 mm. In certain embodiments, the vitreous material is ground or milled to a particle size of 0.01-1 mm, or even 0.02-0.7 mm.

In a particular embodiment, the granulated vitreous material of the disclosure is a granulated vitreous material obtained by means of this first method of preparing a granulated vitreous material.

Alternatively, the vitreous material of the disclosure can be obtained by means of a second method which comprises:
a') heating a mineral composition at a maximum temperature of 1350-1600°C to obtain a molten material;
b') cooling the molten material at a temperature equal to or less than 100°C, for example in a time equal to or less than 60 minutes, to obtain a vitreous material; and
c') grinding the vitreous material to obtain the granulated vitreous material.

The mineral composition used in step a') is selected or prepared such that it gives rise to a granulated vitreous material with the composition defined for the granulated vitreous material of the disclosure.

The mineral composition used in step a') may comprise natural minerals and/or synthetic minerals, including minerals of the type oxides, silicates, carbonates, aluminosilicates, and/or borates. This mineral composition may comprise virgin materials, waste from other processes, and/or materials recycled after use. The minerals comprised in this mineral composition can be selected, for example, from the minerals commonly used for the manufacture of glass or frits. There are a number of combinations that can result in the composition of the granulated vitreous material of the disclosure. The person skilled in the art knows how to identify the appropriate minerals and the proportion thereof, which will depend on the composition of each mineral in question, in order to arrive at the composition of the granulated vitreous material of the disclosure. In embodiments of the disclosure, the mineral composition used in step a') may comprise any mineral selected from the group made up of quartz, feldspar (for example, sodium feldspar, potassium feldspar), dolomite, calcium carbonate, sodium carbonate, lime, alumina, colemanite, or a mixture of two or more of same.

The embodiments disclosed in this document in reference to steps c), d), and e) (and to the corresponding molten material, vitreous material, and granulated vitreous material) of the first method of preparing the granulated vitreous material of the disclosure, also apply to steps a'), b'), and c'), respectively, of this second method of preparing the granulated vitreous material of the disclosure.

In one embodiment, the granulated vitreous material of the disclosure is a granulated vitreous material obtained by means of this second method of preparing a granulated vitreous material.

In one aspect, embodiments relate to the use of the granulated vitreous material of the disclosure for the manufacture of an artificial agglomerated stone article.

In another aspect, the disclosure relates to the use of the granulated vitreous material obtained by means of the first method of preparing a granulated vitreous material for the manufacture of an artificial agglomerated stone article.

In an additional aspect, the disclosure relates to an artificial agglomerated stone article containing the granulated vitreous material of the disclosure or the granulated vitreous material obtained by means of the first method of preparing a granulated vitreous material.

The artificial agglomerated stone article may comprise inorganic fillers (or inorganic filler material) and a hardened binder, wherein the inorganic fillers comprise the granulated vitreous material of the present disclosure.

In one embodiment, the agglomerated stone article comprises 1-70% by weight, or 2-50% by weight, of the granulated vitreous material with respect to the weight of the agglomerated stone article. In one embodiment, the agglomerated stone article comprises 5-50% by weight, or 10-50% by weight, of the granulated vitreous material with respect to the weight of the agglomerated stone article.

The agglomerated stone article may also comprise inorganic fillers other than the granulated vitreous material of the disclosure, such as stone or stone-like materials or ceramic materials.

In one embodiment, the agglomerated stone article comprises as inorganic fillers other natural or synthetic granulated inorganic materials, other than the granulated vitreous material of the disclosure. The granulated inorganic materials other than the granulated vitreous material of the disclosure can be stone materials, minerals, vitreous materials, and/or ceramic materials. For example, the agglomerated stone article may comprise, in addition to the granulated vitreous material of the disclosure, quartz, glass, silica sand, feldspar sand, feldspar, granite, calcite, basalt, cristobalite, dolomite, ceramic, and/or mixtures thereof. According to one embodiment, the agglomerated stone article comprises 10-90% by weight, or 20-90% by weight, of other granulated inorganic materials other than the granulated vitreous material of the disclosure, with respect to the weight of the artificial agglomerated stone article.

In one embodiment, the artificial agglomerated stone article comprises at least 10% by weight of feldspar granules, or at least 20% by weight, or at least 30% by weight, with respect to the weight of the artificial agglomerated stone article. In a particular embodiment, the artificial agglomerated stone article comprises 10-70% by weight of feldspar granules, or 20-70%, or even 40-70% of feldspar granules, with respect to the weight of the artificial agglomerated stone article. In some embodiments, the feldspar is sodium feldspar or the mineral albite.

In one embodiment, the artificial agglomerated stone article may comprise micronized feldspar granules (for example sodium feldspar or albite) only with a particle size of 1-200 micrometers or 1-100 micrometers. In a particular embodiment, the artificial agglomerated stone article comprises 1-30% by weight of micronized feldspar with respect to the weight of the artificial agglomerated stone article.

In particular embodiments of the disclosure, the artificial agglomerated stone article has a low crystalline silica content. Therefore, in certain embodiments, at least 50% by weight, or at least 75% by weight, or at least 90% by weight, or even at least 95% by weight of the inorganic granulated materials other than the granulated vitreous material of the disclosure, have a low crystalline silica content, such as a crystalline silica content (quartz, cristobalite, or other crystalline polymorphs) of 0-30% by weight, or 0-20% by weight, or even 0-10% by weight, with respect to the weight of said inorganic granulated materials.

In certain embodiments, the artificial agglomerated stone article may comprise 0-30% by weight, or even 0-10% by weight, with respect to the weight of the artificial agglomerated stone article, of inorganic granulated materials other than the granulated vitreous material of the disclosure with a crystalline silica content of 30-100% by weight with respect to the weight of said inorganic granulated materials.

According to embodiments of the disclosure, the crystalline silica content of the artificial agglomerated stone article is ≤50% by weight, or ≤40% by weight, with respect to the weight of the artificial agglomerated stone article. In certain embodiments, the crystalline silica content of the artificial agglomerated stone article is ≤25% by weight, or ≤10% by weight, with respect to the weight of the artificial agglomerated stone article. In certain embodiments, the crystalline silica content of the artificial agglomerated stone article is 0-50% by weight, or 0-40% by weight, or 0-25% by weight, or even 0-10% by weight, with respect to the weight of the artificial agglomerated stone article.

The weight of the inorganic filler (sum of the weights of the granulated vitreous material of the disclosure and of any other granulated inorganic material other than the granulated vitreous material of the disclosure) in the artificial agglomerated stone article is preferably 70-95% by weight, or even 85-95% by weight, with respect to the weight of the artificial agglomerated stone article.

The artificial agglomerated stone article may comprise a hardened binder, for example a hardened organic resin (reacted or polymerized), which is suitably liquid when it is not hardened. This resin can be a hardened thermosetting organic resin, which is suitably liquid when it is not hardened, and can be selected from polyester resins (e.g., unsaturated polyester resins), acrylic resins (e.g. acrylate- and methacrylate-based resins), vinyl resins, and epoxy resins.

The hardened organic resin can be obtained by curing or polymerization of a hardenable organic resin. In one embodiment, the organic resin is an unsaturated polyester resin. The hardenable unsaturated polyester resin can be obtained by polymerization of unsaturated dicarboxylic acids (or anhydrides) with diols. For example, by means of the condensation of an acid or anhydride such as maleic acid or anhydride, fumaric acid, (ortho)phthalic acid or anhydride, isophthalic acid, terephthalic acid, adipic acid, succinic acid or sebacic acid, or mixtures thereof, with a diol such as ethylene glycol, diethylene glycol, propylene glycol, butylene glycol, neopentyl glycol, hydrogenated bisphenol A, or mixtures thereof. The hardenable unsaturated polyester resin may also comprise an ethylenically unsaturated monomer, such as styrene, for example in an amount of 25-45% by weight with respect to the total weight of the resin.

In a particular embodiment, the hardenable unsaturated polyester resin is obtained by polymerization of a mixture comprising maleic acid or anhydride, (ortho)phthalic acid or anhydride and propylene glycol.

In one embodiment, the hardenable unsaturated polyester resin comprises an unsaturated polyester prepolymer comprising the following monomer units in the following proportions based on the weight of the prepolymer: 20-35% by weight of (ortho)phthalic anhydride, isophthalic acid, or mixtures thereof; 5-20% by weight of maleic anhydride, fumaric acid, or mixtures thereof; 10-25% by weight of propylene glycol; 0-15% by weight of ethylene glycol; and 0-15% by weight of diethylene glycol. The prepolymer can be diluted in 25-45% by weight of styrene, with respect to the weight of the resin.

The artificial agglomerated stone article may comprise 5-30% by weight, or 5-20% by weight, or even 5-15% by weight, of hardened binder or hardened organic resin, with respect to the weight of the artificial agglomerated stone article.

In one embodiment, the artificial agglomerated stone article comprises 70-95% by weight, or even 80-95% by weight, of inorganic fillers (sum of the weights of the granulated vitreous material of the disclosure and of any other granulated inorganic material other than the granulated vitreous material of the disclosure) and 5-30% by weight, or even 5-20% by weight, of hardened binder or hardened organic resin, with respect to the weight of the artificial agglomerated stone article.

Additionally, the artificial agglomerated stone article may comprise additives, such as colorants or pigments, accelerants, or catalysts for the curing and/or hardening of the binder, adhesion promoters improving adhesion between the granulated vitreous material and the binder (for example, silanes), antimicrobial agents, stabilizers against UV light, or mixtures thereof. Additives of these types and the proportion thereof are known in the state of the art. Preferably, these additives can be present in the artificial agglomerated stone article in an amount of 0.01- 5% by weight with respect to the weight of the artificial agglomerated stone article.

In one embodiment, the artificial agglomerated stone article has an apparent density of 2000-2600 kg/m³ or of 2100-2500 kg/m³. Apparent density can be measured according to standard EN 14617-1:2013-08.

The artificial agglomerated stone article can be, for example, in the form of a block, slab, tile, sheet, board, or plate. The article can also have more complex forms and can include curved parts, such as in sinks, bathroom sinks, or shower trays. In one embodiment, the dimensions of the artificial agglomerated stone article are at least 1500 mm long, at least 1000 mm wide, and 4-40 mm thick; preferably 2000-3500 mm long, 1000-1800 mm wide, and 4-40 mm thick.

The artificial agglomerated stone material can be used for construction or decoration, for example for the manufacture of counters, kitchen countertops, sinks, bathroom sinks, shower trays, wall or floor coverings, stairs, or the like.

The disclosure also relates to a method for the manufacture of the artificial agglomerated stone article of other aspects of the disclosure, which comprises:
i) preparing a mixture comprising the granulated vitreous material of the disclosure and a hardenable binder,
ii) vacuum vibrocompacting the unhardened mixture obtained in step i), and
iii) hardening the compact mixture obtained in step ii).

The mixture of step i) can optionally include other granulated inorganic materials. An unhardened agglomerated mixture is obtained after this step. The mixture can be prepared by known methods, for example, by stirring the components with the use of conventional mixers.

In one embodiment, the mixture of step i) comprises 1-70% by weight, or 2-50% by weight, of the granulated vitreous material of the disclosure with respect to the weight of the mixture.

In one embodiment, the mixture of step i) comprises 10-90% by weight, or 20-90% by weight, of other granulated inorganic materials other than the granulated vitreous material of the disclosure, with respect to the weight of the mixture.

In one embodiment, the mixture of step i) comprises 70-95% by weight, or even 80-95% by weight, of inorganic fillers (sum of the weights of the granulated vitreous material of the disclosure and of any other granulated inorganic material other than the granulated vitreous material of the disclosure) with respect to the weight of the mixture.

In one embodiment, the mixture of step i) comprises 5-30% by weight, or even 5-20% by weight, of hardened binder or hardened organic resin, with respect to the weight of the mixture.

Furthermore, the mixture of step i) may include additives, such as colorants or pigments, curing catalysts, curing accelerants, adhesion promoters (for example, silanes), antimicrobial agents, stabilizers against UV radiation, or mixtures thereof. These additives can be present in the mixture of step i) in an amount of 0.01-5% by weight with respect to the weight of the mixture.

The agglomerated mixture obtained in step i) can then be transported to a distributor device. Suitable distributors are known, such as those used for the distribution of the agglomerated (unhardened) mixtures in the manufacture of agglomerated quartz surfaces. This distributor device can be movable along the length of a temporary mold or of a support sheet. Conveniently, the distributor device deposits the agglomerated mixture in a temporary mold or on a support sheet, forming with the agglomerated mixture a preform which corresponds with the shape of the artificial agglomerated stone article to be produced, with slightly larger dimensions so as to offset the possible shrinkage that occurs during compaction and hardening. In its simplest form, the support sheet can be a sheet of kraft paper or a sheet of plastic. Alternatively, a temporary mold formed by a tray of elastomeric material can be used. The distributor device preferably consists of a feed hopper which receives the mixture in its upper opening and a conveyor belt located below a bottom outlet opening of the hopper, which collects or extracts the mixture from the hopper and deposits it on the support sheet or in the temporary mold. Other distribution devices are possible. The (unhardened) agglomerated mixture which has been distributed in the mold or on the support sheet can preferably be covered with a protective sheet on its upper surface before being subjected to compaction in step ii).

In step ii), the unhardened mixture obtained after step i) is compacted by means of vacuum vibrocompaction to produce a compacted mixture. To that end, in one example, the agglomerated mixture is transported within a compaction area of a press, where it is introduced into a sealable chamber. Next, the chamber is sealed and the vacuum is created with suitable gas evacuation pumps. Once the desired vacuum level has been reached (for example, 5-40 mbar), the piston in the press exerts a compaction pressure simultaneously with the application of a vertical vibration of the piston. During vacuum vibrocompaction, the air trapped in the agglomerated mixture is substantially evacuated.

The compacted mixture obtained after step ii) then moves on to a step iii) of hardening or curing. The step of hardening will depend on the type of binder used, as well as on whether or not suitable hardening catalysts or accelerants are used. In the event that the binder is an organic resin, in this step, the compacted mixture can be subjected to the effect of the temperature in a curing furnace, conveniently heated at 80-120°C, with residence times in the furnace that can range between 20 and 60 minutes. After curing, the hardened compacted mixture is cooled to a temperature equal to or less than 40°C. Other types of hardening and curing are possible.

The artificial agglomerated stone article is obtained after step iii) of hardening, and after separation from the mold or support sheet. This article, which can be in the form of blocks, slabs, boards, plates, tiles, or sheets, can be cut and/or calibrated to the desired final dimensions and can receive the desired surface finish (polishing, pumicing, etc.) on one or both of its larger surfaces, depending on the intended application.

### Examples

### Methods

XRF: Analysis of the composition (oxides) of the samples can be performed by X-ray fluorescence (XRF) on a commercial XRF spectrometer. For example, an approximately 1 g disc of a sample is mixed with lithium tetraborate and calcined in air atmosphere at a temperature of 1050°C for 25 minutes prior to analysis in the spectrometer. The results are reported as relative percentage by weight of oxides (SiO₂, Al₂O₃, etc.), together with the weight "lost on ignition" during calcination (evaporation/desorption of volatile substances, decomposition of minerals and organic matter). The spectrometer is previously calibrated with multipoint calibration curves of known standards concentration. International standard ISO 12677:2011 forXRF analysis can be followed. In addition to the oxide composition, loss on ignition (L.O.I.) is determined during XRF analysis. Loss on ignition denotes the weight of volatile substances, and matter that breaks down into volatile substances, under the conditions of the measurement. Loss on ignition can also be determined separately by methods other than XRF, for example, by thermogravimetry.

XRD: As an example, the identification and quantification of crystalline phases can be performed by powder X-ray diffraction (XRD) combined with the Rietveld method, and with the use of an internal standard. This method allows the total amorphous phase to be quantified as well. The internal standard methodology requires that a known amount of reference standard (corundum, for example) be mixed and homogenized with each sample to be analyzed, optionally using a small amount of isopropanol or other mixing/homogenization adjuvant. A Ge(111) monochromator generating CuKα1 radiation and an X'Celerator detector from commercial equipment (e.g., PANalytical X'Pert Pro automated diffractometer) can be used. X-ray diffraction patterns of the powder can be registered between 4° and 70° in 2θ to 60 s/pass, while rotating to increase the statistical distribution of the particles. Once the powder X-ray diffraction data is obtained, software (e.g., Brucker's DIFFRAC.EVA) can be used to perform identification of the crystalline phases by comparison with the cataloged diffraction patterns. Quantification of crystalline and amorphous phases can be performed with the Rietveld refinement method, e.g., using TOPAS software (from Coelho Software). The content of the crystalline phases and the total amorphous phase is calculated as a percentage by weight of the analyzed sample, after subtracting the amount of the internal standard used.

Granulometry: The particle size, also referred to as particle diameter, of the granules can be measured by means of known sieve separation using sieves of different mesh size. For granules with a particle size <200 micrometers, the particle size distribution can be measured by laser diffraction with commercial equipment (e.g., Malvern Panalytical Mastersizer 3000 equipped with a Hydro cell). For measurement, the granule sample can be dispersed in demineralized water assisted by an ultrasound probe. The laser diffractometer provides particle distribution curves (particle volume versus particle size) and the statistical values D10, D50, and D90 of the particle population (particle size values in a volumetric distribution where 10%, 50%, or 90% of the sample particle population in a volumetric distribution is below this value, respectively).

In the cases throughout this description where a granulated material is said to have a particle size in a given range, it means that less than 1% of the particles by volume, of the total population of particles for this granulated material, have a particle size outside the given range. In one embodiment, less than 0.5% of the particles by volume, of the total population of particles for this granulated material, have a particle size outside the given range. In another embodiment, less than 0.1% of the particles by volume, of the total population of particles of this granulated material, have a particle size outside the given range.

### Example 1: Vitreous materials according to the disclosure and comparative materials from mineral mixtures.

A series of vitreous materials were prepared in a melting and cooling process, generally as described below.

Several minerals were ground to a particle size less than 100 micrometers, with a maximum of 10% by volume of particles with a size > 45 micrometers, before being mixed and homogenized to form a mineral composition. This mineral composition was added to a crucible which was introduced into a muffle furnace set at a temperature of 1400-1450°C for a period of 0.5 hours until obtaining a melt. The liquid melt was taken out of the muffle furnace and poured as a trickle or stream onto a metal plate until it reached room temperature, forming a cooled vitreous material. After 0.5 hours, the vitreous material on the metal plate had already reached room temperature.

The minerals that formed the initial mineral composition were calcium carbonate, calcium oxide, sodium carbonate, dolomite, colemanite, quartz, and potassium and sodium feldspars. Their proportion was set based on their specific composition (previously obtained by means of XRF) to result in the vitreous material compositions, obtained by means of XRF, which are included in Table 1.

**Table 1**

| | Composition (% by weight) | | | | | | | | | | Sum Al₂O₃+CaO+Na₂O |
|---|---|---|---|---|---|---|---|---|---|---|---|
| | SiO₂ | Al₂O₃ | CaO | MgO | Na₂O | K₂O | B₂O₃ | Fe₂O₃ | TiO₂ | Rest | |
| **G1** | 58.8 | 4.5 | 33.9 | 0.2 | 2.3 | 0.1 | <0.1 | 0.1 | 0.1 | <0.1 | 40.7 |
| **G2** | 58.0 | 4.4 | 33.4 | 0.2 | 2.3 | 0.1 | 1.3 | 0.1 | 0.1 | 0.1 | 40.1 |
| **G3** | 56.1 | 4.3 | 33.2 | 0.3 | 2.2 | 0.1 | 3.6 | 0.1 | 0.1 | <0.1 | 39.7 |
| G4* | 51.2 | 4.0 | 41.0 | 0.2 | 2.0 | 0.1 | 1.1 | 0.1 | 0.1 | 0.2 | 47.0 |
| G5* | 69.7 | 5.4 | 20.0 | 0.2 | 2.8 | 0.2 | 1.5 | 0.1 | 0.1 | <0.1 | 28.2 |
| G6* | 54.4 | 8.1 | 33.6 | 0.2 | 2.2 | 0.1 | 1.2 | 0.1 | 0.1 | <0.1 | 43.9 |
| G7* | 69.0 | 8.3 | 11.0 | 0.9 | 8.8 | 0.3 | 1.5 | 0.1 | 0.1 | <0.1 | 28.1 |

| | | | | | | | | | | | |
|---|---|---|---|---|---|---|---|---|---|---|---|
| * Comparative | | | | | | | | | | | |

To evaluate the susceptibility of the vitreous materials described herein to chemical etching, the following procedure was used. On the surface of the vitreous material to be tested, an aliquot of an aqueous solution of HCl at 18% by volume (v/v) was deposited, and separately another aliquot of an aqueous solution of KOH at a concentration of 100 g/l was deposited. Both aliquots were left on the vitreous material for 96 hours, after which the surface impairment of the vitreous material was visually evaluated.

Materials G1-G3 are embodiments according to the disclosure, whereas materials G4-G7 are included for purposes of comparison.

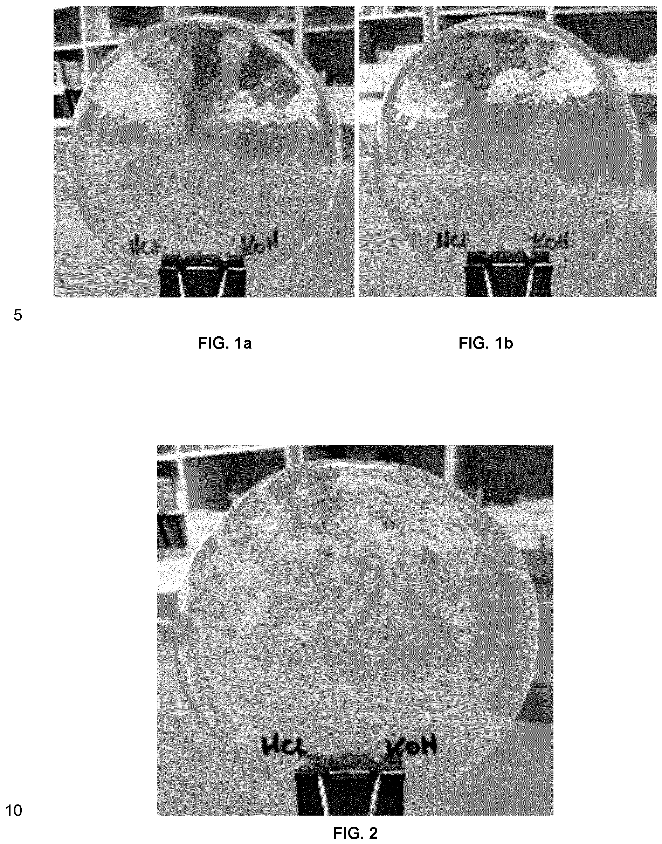

Materials G1 and G2 showed a high transparency, with a homogeneous appearance, without the occurrence of non-melted regions or opalescence. Both G1 and G2 showed no sign of chemical etching when exposed to HCl or KOH. Figures 1a and 1b show images of materials G1 and G2, respectively, after exposure to HCl and KOH.

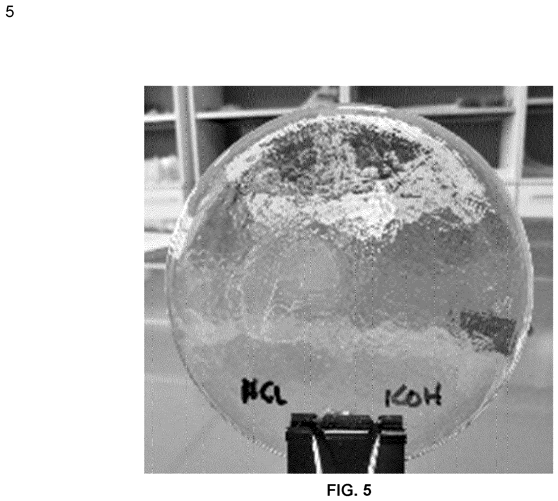

Material G3 also exhibited good transparency and homogeneity, although it showed slight susceptibility to chemical etching with HCl, as can be seen in the image of this material depicted in Figure 5.

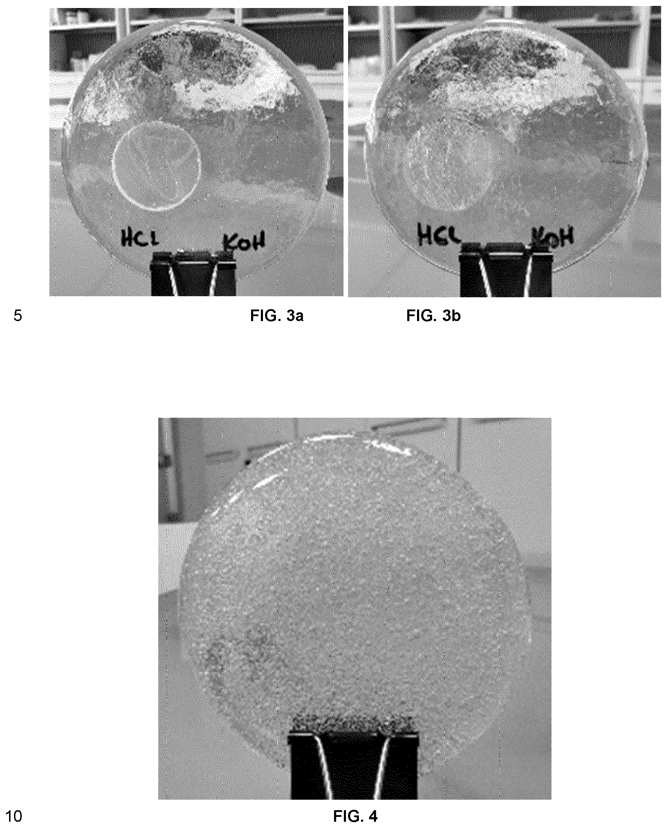

Vitreous materials G4 and G6 showed, in both cases, a visibly very high chemical etching with HCl. Figures 3a and 3b show images of materials G4 and G6, respectively, after the evaluation of the susceptibility to chemical etching.

The appearance of material G5 showed poor homogeneity, with the occurrence of whitish areas as a sign of an unwanted phase separation in the vitreous matrix. Figure 2 shows an image of material G5.

In turn, material G7 exhibited a large content of bubbles embedded in the vitreous matrix, as can be observed in Figure 4.

It can be concluded from these obtained results that the vitreous materials according to the disclosure have improved properties with respect to other comparative vitreous materials, which causes these compositions to exhibit significant advantages for use as a granulate in artificial agglomerated stone. The high transparency and high homogeneity, with an absence of imperfections in the granules, produce an effect of depth of color, brightness, absence of porosity and, in general, high surface homogeneity after polishing, which are all highly valued characteristics in articles of this type. Furthermore, the chemical inertness of the granulated vitreous materials of the disclosure increases the resistance to staining and the resistance to hydrolysis of the artificial agglomerated stone.

### Example 2: Vitreous materials according to the disclosure prepared from sludges.

Another series of vitreous materials were prepared using as a raw material sludges generated during the calibration, polishing, and/or cutting of boards of artificial agglomerated stone with organic resin.

The sludges were collected from the process water of an industrial production line for agglomerated products of this type. An amount of several kilograms of sludges was obtained by decantation of this water and air dried before disaggregating and subjecting same to a calcination heat treatment at a temperature of 600°C for a period of 4 hours.

After calcination, the calcined sludges exhibited a composition, obtained by XRF, as shown in Table 2.

**Table 2**

| | % by weight |
|---|---|
| SiO₂ | 80.6 |
| Al₂O₃ | 9.6 |
| Na₂O | 5.2 |
| CaO | 2.2 |
| TiO₂ | 0.9 |
| K₂O | 0.2 |
| Fe₂O₃ | 0.1 |
| Loss on ignition | 1.1 |
| Rest | 0.1 |

As for the crystalline phases included in the calcined sludges measured by XRD, they were determined to present albite in a proportion of 44% by weight, quartz at 11% by weight, cristobalite at 30% by weight, and with less than 4% by weight of other crystalline mineral phases. The amorphous content (glass, organic matter) was estimated to be 11% by weight.

Four different vitreous materials L1-L4 according to the disclosure were prepared following a procedure equivalent to that of vitreous materials G1-G7, with the difference being that the raw materials used comprised a mixture of different proportions of calcined sludges mixed with a mineral composition. Both the calcined sludges and the mineral composition were micronized to a particle size less than 100 micrometers, with a maximum of 10% by volume of particles with a size > 45 micrometers. The proportion by weight of calcined sludges with respect to the weight of the mineral composition for the production of vitreous materials L1-L4 was as indicated in Table 3.

**Table 3**

| Material | L1 | L2 | L3 | L4 |
|---|---|---|---|---|
| Calcined sludge (% weight) | 13 | 20 | 40 | 64 |
| Mineral composition (% weight) | 87 | 80 | 60 | 46 |

The minerals in the mineral composition were the same as those in vitreous minerals G1-G7, although their proportion was adjusted, based on their previously determined composition and on the composition of the calcined sludges described above, to result in vitreous materials with the compositions which are included in Table 4.

**Table 4**

| | Composition | | | | | | | | | | Sum Al₂O₃+CaO+Na₂O |
|---|---|---|---|---|---|---|---|---|---|---|---|
| | SiO₂ | Al₂O₃ | CaO | MgO | Na₂O | K₂O | B₂O₃ | Fe₂O₃ | TiO₂ | Rest | |
| **L1** | 58.0 | 4.4 | 33.4 | 0.2 | 2.3 | 0.1 | 1.3 | 0.1 | 0.2 | <0.1 | 40.1 |
| **L2** | 57.9 | 4.4 | 33.4 | 0.2 | 2.3 | 0.1 | 1.3 | 0.1 | 0.3 | <0.1 | 40.1 |
| **L3** | 58.4 | 4.6 | 32.3 | 0.2 | 2.4 | 0.1 | 1.3 | 0.1 | 0.5 | 0.1 | 39.3 |
| **L4** | 57.9 | 6.9 | 28.8 | 0.2 | 3.7 | 0.1 | 1.3 | 0.1 | 0.8 | 0.2 | 39.4 |

The crystalline mineral phases contained in materials L1 - L4, determined by XRD, are at a concentration by weight < 1%. Vitreous materials L1 - L4 have an essentially amorphous content.

The four granulated materials L1 - L4 showed a very good transparency and homogeneity. Additionally, L1 - L4 exhibited excellent resistance to chemical etching with both HCl and KOH, making them particularly suitable for use as granulates in artificial agglomerated stone.

### Example 3: Preparation of artificial agglomerated stone using vitreous materials according to the disclosure

In an additional series of experiments S1-S3, vitreous materials were prepared in a semi-industrial (or industrial) furnace and then granulated and sieved for use in the manufacture of artificial agglomerated stone articles.

In examples S1 and S2, a mineral composition comprising dolomite, sodium carbonate, quartz, potassium feldspar, and sodium feldspar in different proportions was used as the raw materials. The mineral composition in S2 furthermore comprised colemanite.

In the case of S3, the raw materials comprised 40% by weight with respect to the weight of the raw materials, of sludges generated during the calibration, polishing, and/or cutting of boards of artificial agglomerated stone with organic resin, and 60% of a mineral composition comprising the minerals described for S2, but with the proportions thereof adjusted such that they result in the final composition of the vitreous material, considering the composition of the sludge. In S3, before use as a raw material, the sludges were treated and calcined as described in Example 2, with the exception that calcination took place at 900°C instead of 600°C.

The composition of the calcined sludge in this case was the composition shown in Table 5:

**Table 5**

| | % by weight |
|---|---|
| SiO₂ | 81.0 |
| Al₂O₃ | 9.8 |
| Na₂O | 5.3 |
| CaO | 2.0 |
| TiO₂ | 1.2 |
| K₂O | 0.2 |
| Fe₂O₃ | <0.1 |
| Loss on ignition | 0.3 |
| Rest | 0.2 |

In the three examples S1-S3, the raw materials were ground to a particle size less than 100 micrometers, with a maximum of 10% by volume of particles with a size > 45 micrometers, before being mixed and homogenized. The raw materials were introduced into an industrial or semi-industrial furnace with a temperature profile with a maximum in the range of 1450-1550°C for a period of 30-60 minutes of residence time at that temperature. The melt was then taken out of the industrial furnace and discharged directly onto a platform with water recirculated at a temperature between 15 and 30°C. The cooled fractured material obtained was dried, ground, and sieved to a particle size between 40 and 300 micrometers.

The three granulated vitreous materials exhibited good transparency, homogeneity, and an absence of non-melted regions or phase separation. The composition of granulated vitreous materials S1-S3 is shown in Table 6:

**Table 6**

| | Composition | | | | | | | | | | Sum Al₂O₃+CaO+Na₂O |
|---|---|---|---|---|---|---|---|---|---|---|---|
| | SiO₂ | Al₂O₃ | CaO | MgO | Na₂O | K₂O | B₂O₃ | Fe₂O₃ | TiO₂ | Rest | |
| S1* | 57.0 | 4.1 | 25.5 | 9.9 | 2.0 | 1.4 | <0.1 | <0.1 | <0.1 | 0.1 | 31.6 |
| **S2** | 62.1 | 5.3 | 26.6 | 0.3 | 2.5 | 0.3 | 1.2 | <0.1 | 0.6 | 1.1 | 34.4 |
| **S3** | 60.6 | 5.4 | 26.9 | 0.3 | 2.5 | 1.0 | 1.2 | 0.1 | 0.1 | 1.9 | 34.8 |

| | | | | | | | | | | | |
|---|---|---|---|---|---|---|---|---|---|---|---|
| * Comparative | | | | | | | | | | | |

As can be seen in Table 6, material S1 is a comparative material that does not have a composition according to the claims, with a content of MgO that is much higher than materials S2 and S3, and a sum of the percentages of the content of Al₂O₃+CaO+Na₂O that is also far from the claimed values. Materials S2 and S3, however, have compositions according to the claims.

The particle size cut of 40 - 300 micrometers of S1-S3 was used to manufacture slabs with a size of 30x30 cm² of artificial stone agglomerate. In a first series S1IB, S2IB, S3IB, the composition of the slabs corresponded with the composition of a commercial artificial stone agglomerate article, Silestone^{®} Iconic Black, and in a second series S1P, S2P, S3P, the composition corresponded with the composition of a commercial artificial stone agglomerate, Silestone^{®} Pietra, where in both series the total 40-300 micrometer particle size cut of quartz contained in each of the commercial products was replaced with the 40 - 300 micrometer particle size cut of S1, S2, or S3 respectively.

For the manufacture of artificial agglomerated stone slabs, the inorganic fillers in the corresponding particle size cuts were mixed with a commercial hardenable liquid unsaturated polyester resin, and with usual additives and pigments already known in the art for the manufacture of these products by the vacuum vibrocompaction method. The mixture was deposited homogeneously distributed between two sheets of Kraft paper and vacuum vibrocompacting in a press suitable for this purpose, until most of the included air was removed. Then, the mixture was placed in a furnace at 85-95°C for 30-60 minutes to harden the resin. When the hardened slab was removed from the furnace and cooled to room temperature, it was calibrated to remove the paper and one of the larger surfaces of the slab was polished.

The appearance of the polished surface of slabs S1IB, S2IB, S3IB, S1P, S2P, and S3P is good in all cases, both in terms of brightness achieved and in terms of the absence of surface porosity, being, in any case, comparable with the slabs with the composition of the respective Silestone^{®} Iconic Black and Silestone^{®} Pietra commercial products.

The CIE LAB colorimetry of the slabs manufactured with the 40 - 300 micrometer cuts of S1, S2, and S3, respectively, was measured on their polished surface with a commercial spectrophotometer (Konica Minolta CM-3600d), comparing it with the colorimetry of the slabs with the composition of the commercial stone agglomerate article containing the 40 - 300 micrometer cut of quartz. The results are shown in Table 7.

**Table 7**

| | L* | a* | b* |
|---|---|---|---|
| Silestone^{®} Ionic Black | 30.0 | 0.4 | -1.7 |
| S1IB | 30.1 | 0.4 | -1.6 |
| S2IB | 30.2 | 0.4 | -1.6 |
| S3IB | 30.0 | 0.4 | -1.5 |
| Silestone^{®} Pietra | 68.5 | 0.5 | 4.2 |
| S1P | 68.5 | 0.6 | 4.7 |
| S2P | 68.4 | 0.4 | 4.3 |
| S3P | 68.0 | 0.5 | 4.3 |

To evaluate the susceptibility to acid etching of the surface of the prepared slabs, aliquots of a 20% (w/w) solution of HCl diluted in water (Salfuman^{®}) were deposited on the polished surface of the slabs and the visual/tactile surface impairment was evaluated at different time intervals by a trained analyst, who assigned a value according to the degree of impairment between 0 (unimpaired) and 3 (very impaired). The results obtained for the different slabs S1IB, S2IB, S3IB, S1P, S2P, S3P, as well as for slabs with the composition of the Silestone^{®} Iconic Black and Silestone^{®} Pietra commercial products, with the 40-300 micrometer cut of quartz, are shown in Table 8:

**Table 8. Impairment of the polished surface (0 - unimpaired, 3 - very impaired)**

| | Evaluation time | | | | | |
|---|---|---|---|---|---|---|
| | 2 h | 4 h | 6 h | 8 h | 12 h | 24 h |
| Silestone^{®} Ionic Black* | 0 | 0 | 0 | 0 | 0 | 0 |
| S1IB* | 2 | 2 | 2 | 2 | 3 | 3 |
| **S2IB** | 0 | 0 | 0 | 0 | 0 | 0 |
| **S3IB** | 0 | 0 | 0 | 0 | 0 | 0 |
| Silestone^{®} Pietra* | 1 | 1 | 1 | 1 | 1 | 1 |
| S1P* | 1 | 2 | 2 | 3 | 3 | 3 |
| **S2P** | 0 | 0 | 0 | 0 | 1 | 1 |
| **S3P** | 0 | 0 | 0 | 0 | 0 | 1 |

| | | | | | | |
|---|---|---|---|---|---|---|
| * Comparative | | | | | | |

Based on the results shown in Table 8, it can be concluded that artificial agglomerated stone slabs S2IB, S3IB, S2P, and S3P, which incorporate granulated vitreous materials S2 and S3 according to the claims, exhibited an evident improved resistance to acid etching than in the case of S1IB and S1P, which incorporate comparative granulated vitreous material S1.

## Claims

1. An artificial agglomerated stone article comprising a granulated vitreous material and a hardened binder, wherein the granulated vitreous material has a composition comprising:
| | % by weight |
|---|---|
| SiO₂ | 50 - 65% |
| Al₂O₃ | 1 - 7.5% |
| CaO | 23 - 39% |
| Na₂O | 1 - 6% |
| MgO | 0 - 1.5% |
and wherein the sum of the percentages by weight of Al₂O₃, CaO, and Na₂O in the granulated vitreous material is in the range of 32 - 43% by weight,
with respect to the weight of the granulated vitreous material.

2. The article according to claim 1, wherein the granulated vitreous material comprises 0.1 - 3% by weight of B₂O₃, with respect to the weight of the granulated vitreous material.

3. The article according to any one of claims 1 to 2, wherein the granulated vitreous material comprises 25 - 36% by weight of CaO, with respect to the weight of the granulated vitreous material.

4. The article according to any one of claims 1 to 3, wherein the sum of the percentages of SiO₂+Al₂O₃+CaO+Na₂O+B₂O₃ comprised in the granulated vitreous material is 92 - 99.9%, with respect to the weight of the granulated vitreous material.

5. The article according to any one of claims 1 to 4, wherein the sum of the crystalline phases in the granulated vitreous material is 0-10% by weight, with respect to the weight of the granulated vitreous material.

6. The article according to any one of claims 1 to 5, wherein the article comprises 1-70% by weight of the granulated vitreous material, such as 2 to 50% by weight, with respect to the weight of the article.

7. The article according to any one of claims 1 to 6, wherein the article comprises 5-20% by weight, or even 5-15% by weight, of the hardened binder, such as a hardened organic resin, with respect to the weight of the article.

8. The article according to any one of claims 1 to 7, wherein the article comprises 10-90% by weight of feldspar granules, such as sodium feldspar or albite granules, with respect to the weight of the article.

9. A method for the manufacture of an artificial agglomerated stone article as defined in any one of claims 1 to 8, which comprises:
i) preparing a mixture comprising a granulated vitreous material as defined in any of claims 1 to 5 and a hardenable binder,
ii) vacuum vibrocompacting the unhardened mixture obtained in step i), and
iii) hardening the compact mixture obtained in step ii).

10. The method according to claim 9, which comprises preparing the granulated vitreous material of step i) by means of a process which comprises:
a) treating a sludge generated in the machining of agglomerated stone to obtain a treated sludge;
b) combining the treated sludge with a mineral composition to obtain a mixture;
c) heating the mixture at a temperature of 1350-1600°C to obtain a molten material;
d) cooling the molten material at a temperature equal to or less than 100°C, in a time equal to or less than 60 minutes, to obtain a vitreous material; and
e) grinding the vitreous material to obtain the granulated vitreous material.

11. The method according to claim 10, wherein step a) comprises treating the sludge at a temperature of 400 - 1050°C, for example prior to and separately from steps b) and c), to obtain a calcined treated sludge.

12. The method according to any one of claims 10 to 11, wherein the treated sludge comprises 3-12% by weight of Na₂O, such as 3.5-10% by weight, with respect to the weight of the treated sludge.

13. The method according to any one of claims 10 to 12, wherein the treated sludge comprises 15-70% by weight of albite as crystalline phase, with respect to the weight of the treated sludge.

14. The method according to any one of claims 10 to 13, wherein the mixture obtained in step b) comprises 20 - 70% of treated sludge, with respect to the weight of the mixture.

15. The method according to any one of claims 10 to 15, wherein the treated sludge has a composition comprising:
| | % by weight |
|---|---|
| SiO₂ | 65 - 90% |
| Al₂O₃ | 4 - 15% |
| CaO | 0.5 - 10% |
| Na₂O | 3 - 12% |
